# EUROPEAN PATENT SPECIFICATION

(11) **EP 1 256 654 B1**
(45) Date of publication and mention of the grant of the patent: **17.01.2007**
(21) Application number: 02010443.6
(22) Date of filing: 08.05.2002
(51) Int. Cl.: D21G 1/02, F16C 13/02, F16C 13/00, F16C 32/06

(54) **Roll for a paper or board machine or for a finishing machine, and method for making the same**
Walze für eine Papier- oder Kartonmaschine oder für eine Veredlungsmaschine, und Verfahren zu dessen Herstellung
Rouleau pour une machine de fabrication de papier ou de carton ou pour une machine de finition, et procédé de fabrication du rouleau

(30) Priority: 09.05.2001 FI 20010969
(43) Date of publication of application: 13.11.2002
(73) Proprietor: Metso Paper, Inc., 00130 Helsinki (FI)
(72) Inventor: Heikkinen, Jukka, 40740 Jyväskylä (FI)
(74) Representative: TBK-Patent

(56) References cited:
- DE-A- 10 019 506
- DE-B- 1 270 343
- GB-A- 935 810
- GB-A- 967 937
- US-A- 4 406 857
- US-A- 4 856 157
- US-A- 5 176 455
- US-A- 5 189 775

## Description

The invention relates to a roll for a paper or board machine or for a finishing machine, wherein the roll comprises a stationary shaft, a roll shell adapted to rotate about the shaft and a slide bearing, and wherein the slide bearing comprises a number of bearing elements provided with hydraulically loadable loading shoes. The invention also relates to a method for manufacturing such a roll.

Furthermore, the invention relates to a roll for a paper or board machine or for a finishing machine, wherein the roll comprises a bearing block, a rotary shaft and a slide bearing, and wherein the slide bearing comprises a number of bearing elements provided with hydraulically loadable loading shoes. The invention also relates to a method for manufacturing such a roll.

In currently available roll-mounted slide bearings, the loading shoes are made from a cast body of bronze. The use of bronze loading shoes stems from an effort to ensure sufficiently good sliding properties between a roll shaft and a loading shoe, even in the event of an oil film normally present therebetween being lost for some reason or another. This is based on bronze having inherently good sliding characteristics, especially when using copper lead or lead bronze. However, a drawback of bronze is its low modulus of elasticity and bearing deformations resulting therefrom, which limit the load capacity of a bearing. Limited load tolerance has become a problem in bearing applications, as increased speeds in modern large and high-speed paper machines necessitate higher loading pressures. In addition, the casting and machining of a lead-bearing metal alloy involve industrial toxicological drawbacks for working conditions and environment.

A roll and a manufacturing method comprising the features summarized in the preambles of claims 1 and 8 are known from document GB 935810 A. The body of the loading shoes of this known roll can consist of steel.

A roll and a manufacturing method comprising the features summarized in the preambles of claims 2 and 9 are known from document DE 100 19 506 A.

Document US 5 176 455 A discloses a hydrostatic slide bearing assembly comprising a bearing element for rotatably supporting a rotary shaft. The bearing element has a body made of steel, the sliding surface of which is coated with a coating consisting of a low friction wear resistant material such as, for example, silver. This low friction wear resistant coating is provided for preventing seizing in a boundary lubrication situation.

Document DE 1270343 B discloses a hydrodynamic slide bearing assembly comprising a number of bearing elements provided with loading shoes. The loading shoes comprise a body made of steel, and the sliding surface of the loading shoes is coated with babbitt metal, i.e. a metal material having a lubricating component. The body is made of steel to impart strength to the loading shoe, and the babbitt material is provided for achieving low friction.

It is an object of the present invention to provide a roll for a paper or board machine or for a finishing machine with a novel and improved type of slide bearing, and a method for manufacturing the same.

According to a first aspect of the invention, this object is achieved by the roll and the method defined in claims 1 and 8. According to a second aspect of the invention, this object is achieved by the roll and the method defined in claims 2 and 9.

Advantageous further developments of the invention are defined in the dependent claims.

Use of the inventive solution provides a roll-mounted slide bearing which is essentially improved in terms of its strength and rigidity. At the same time, the invention also enables the use of higher loading pressures between the loading shoe of a slide bearing and the shell or shaft of a roll. This also enables the use of smaller-than-before loading shoes.

The invention will now be described in more detail with reference to the accompanying drawings, in which:
- Fig. 1: shows in a schematic representation a deflection compensated roll, wherein a shell is supported rotatably on a stationary shaft through the intermediary of slide elements.
- Fig. 2: shows in a schematic representation a slide bearing assembly for the end of a roll as shown in fig. 1, wherein sliding surfaces are established between the inner shell surface and the loading shoe.
- Fig. 3: shows in a schematic representation a slide bearing assembly for the end of a rotary shaft roll, wherein sliding surfaces are established between the shaft neck and the loading shoe.

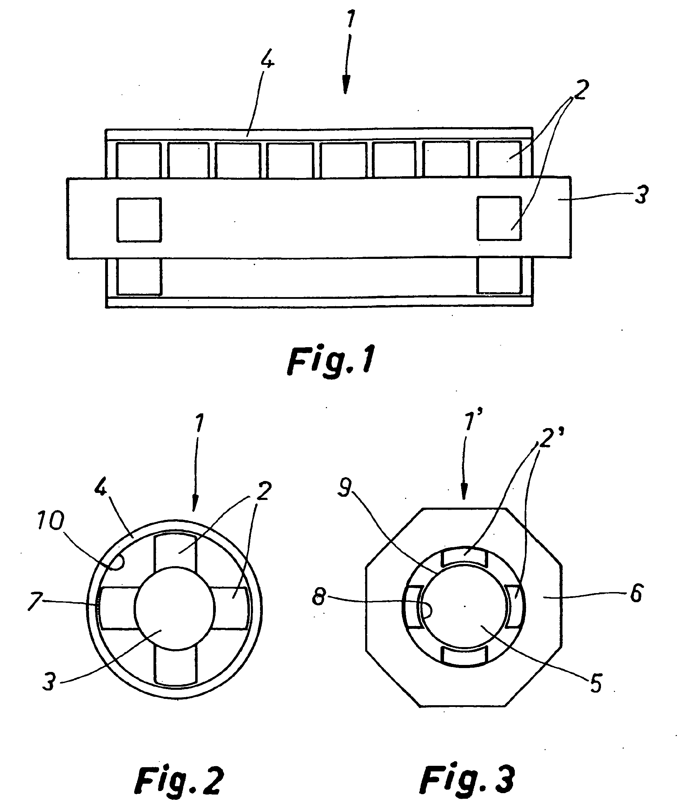

The illustrated slide bearing for a stationary or rotary shaft roll 1, 1' in a paper/board or finishing machine comprises a number of bearing elements provided with hydraulically loadable loading shoes 2, 2'. The bearing elements are mounted either on a stationary shaft 3 of the stationary shaft roll 1 (figs. 1 and 2) for supporting a roll shell 4 rotatably and for loading the same hydraulically, or around a rotating shaft 5 of the rotary shaft roll 1' (fig. 3) for supporting the shaft 5 rotatably relative to a bearing block 6 or the like.

Each loading shoe has usually 4 or 6 lubricating pockets into which lubricating oil is fed through the shoe. Around the pockets there are lands which form the sliding surface.

This type of solutions are known as such and, hence, not discussed further at this time.

Normally the oil layer between the sliding surfaces of a shoe and a roll shell is 0.05 mm thick. Owing to some disturbances or deflections of the shoe or the roll shell, however, thickness of the oil layer will decrease or disappear totally which will cause mechanical contact between the sliding surfaces.

During fault situations surface pressure may for example be about 30 - 36 MPa. In such a boundary lubrication situation, when the oil layer is deficient, a risk exists that the sliding surfaces will seize.

According to prior art, the loading shoes 2 are generally made from a cast body of bronze. Such a structure does not provide an all-round satisfactory end result.

Therefore, one of the objects of the invention is to accomplish an improved structure for the slide bearing compared with a cast body of bronze.

In the inventive solution, the bearing is constructed as a compound structure. The loading shoe 2, 2' has its body made from a metal material with a modulus of elasticity higher than that of bronze. In addition, the rotating shaft 5 of the rotary shaft roll 1' or the shell 4 of the roll 1 with the stationary shaft 3 has its sliding surface 9, 10 coated with a metal material having a lubricating component which prevents seizing in a boundary lubrication situation. Additionally, the loading shoes 5, 5' can have their sliding surface 7, 8 coated with a metal having a lubricating component which prevent seizing in a boundary lubrication situation.

In the context of this application, the term "coating" refers to a material layer provided on the sliding surface of a loading element, which is laid on the surface of a cast shoe in a separate coating process. In order to fulfil the requirements of a bearing application, the coating must be an integral part of a body, with no distinctive interfacial surface developing between the body and the coating.

A preferred coating method is for example molten metal spraying (OSPRAY), particularly when coating an external shaft surface, as it is highly suitable for rotationally symmetrical bodies. Another preferred method is powder metallurgy, e. g. an HIP (hot isostatic pressing) technique, which is applicable for coating both a shaft and an internal shell surface, and especially the sliding surface of a shoe. In HIP technique, the steel body of a shoe is supplied with a coating material, e.g. pre-alloyed steel, in the form of atomized spherical particles having a very small diameter (<500 µm). The coating material is encapsulated between the steel body and the mould, and the capsule is evacuated. Under a high pressure and temperature, with the coating material nevertheless in a non-molten state, the result is a surface layer having a highly homogeneous and fine-grained constitution, which is also homogeneous in terms of its characteristics and optimizable for each requirement by means of an alloying process. The result is a structure in which the coating is an integral element of the body material, such that delamination cannot take place. The use of bronze as an HIP coating material provides a final result which is particularly optimal in terms of sliding characteristics.

Conventional coating, e.g. by thermal spraying, is also feasible, though not preferred. A thermally sprayed coating is susceptible to delamination, cracking and other such peeling under the slide bearing conditions of a paper machine, particularly if the oil film between sliding surfaces becomes excessively thin and the surface is exposed to contact with a metal. The crumbling of a coating material would be not only fatal in terms of the function of a bearing surface but also inconvenient in terms of the upgrading of circulating lubrication oil. As a matter of fact, thermal spraying as a coating technique is only relevant in exceptional circumstances, in which the bearing shall not be exposed to a major load, and a sufficient oil film can be secured.

The metal material with a higher modulus of elasticity useful as a body material for the shoe in the invention comprises preferably steel (modulus of elasticity in the order of 200 kN/mm2). Other material options may also be feasible. The employed coating material can be e.g. bronze (modulus of elasticity 100 kN/mm2) or e.g. Sn-, Pb-, Mo-alloyed steels with sufficient sliding characteristics.

In preliminary tests tin bronze (CuPb5Sn5) coating accomplished for example with HIP process on steel body has been found as a practical solution.

The inventive solution is capable of providing a structure, which combines a modulus of elasticity sufficient regarding deformations of the shoe and good sliding properties for the bearing. The inventive solution is capable of eliminating the heavy-duty machining of bronze bodies, which is a distinctive improvement in working conditions, especially with regard to lead bronze.

## Claims

1. A roll for a paper or board machine or for a finishing machine, the roll comprising a stationary shaft (3), a roll shell (4) adapted to rotate about said shaft (3) and a slide bearing,
wherein said slide bearing comprises a number of bearing elements provided with hydraulically loadable loading shoes (2), which are mounted on said stationary shaft (3) for rotatably supporting and hydraulically loading said roll shell (4), and
wherein said loading shoes (2) have a body consisting of a metal material with a modulus of elasticity higher than that of bronze,
**characterized**
**in that** the sliding surface (10) of said roll shell (4) is coated with a coating consisting of a metal material having a lubricating component which prevents seizing in a boundary lubrication situation.

2. A roll for a paper or board machine or for a finishing machine, the roll comprising a bearing block (6), a rotary shaft (5) and a slide bearing,
wherein said slide bearing comprises a number of bearing elements provided with hydraulically loadable loading shoes (2'), which are mounted on said bearing block (6) around said rotary shaft (5) for supporting said rotary shaft (5) rotatably relative to said bearing block (6),
**characterized**
**in that** said loading shoes (2') have a body consisting of a metal material with a modulus of elasticity higher than that of bronze, and
**in that** the sliding surface (9) of said rotary shaft (5) is coated with a coating consisting of a metal material having a lubricating component which prevents seizing in a boundary lubrication situation.

3. The roll according to claim 1 or 2, wherein the body of said loading shoes (2, 2') consists of steel.

4. The roll according to one of claims 1 to 3, wherein the sliding surface (7, 8) of said loading shoes (2, 2') is coated with a shoe coating consisting of a metal material having a lubricating component which prevents seizing in a boundary lubrication situation.

5. The roll according to claim 4, wherein the body and the shoe coating of said loading shoes (2, 2') constitute an integral structure.

6. The roll according to one of claims 1 to 5, wherein said coating and said shoe coating, if provided, consist of bronze.

7. The roll according to one of claims 1 to 5, wherein said coating and said shoe coating, if provided, consist of an alloyed steel comprising at least one alloying element selected from the following group: Sn, Pb and Mo.

8. A method for manufacturing a roll for a paper or board machine or for a finishing machine, the roll comprising a stationary shaft (3), a roll shell (4) adapted to rotate about said shaft (3) and a slide bearing, wherein said slide bearing comprises a number of bearing elements provided with hydraulically loadable loading shoes (2), which are mounted on said stationary shaft (3) for rotatably supporting and hydraulically loading said roll shell (4),
wherein the method comprises
a step of forming a body of said loading shoes (2) from a metal material with a modulus of elasticity higher than that of bronze,
wherein the method is **characterized by**
a step of coating the sliding surface (10) of said roll shell (4) with a coating consisting of a metal material having a lubricating component which prevents seizing in a boundary lubrication situation.

9. A method for manufacturing a roll for a paper or board machine or for a finishing machine, the roll comprising a bearing block (6), a rotary shaft (5) and a slide bearing,
wherein said slide bearing comprises a number of bearing elements provided with hydraulically loadable loading shoes (2'), which are mounted on said bearing block (6) around said rotary shaft (5) for supporting said rotary shaft (5) rotatably relative to said bearing block (6),
wherein the method is **characterized by**
a step of forming a body of said loading shoes (2') from a metal material with a modulus of elasticity higher than that of bronze, and
a step of coating the sliding surface (9) of said rotary shaft (5) with a coating consisting of a metal material having a lubricating component which prevents seizing in a boundary lubrication situation.

10. The method according to claim 8 or 9, wherein the body of said loading shoes (2, 2') is formed of steel.

11. The method according to one of claims 8 to 10, further comprising a step of coating the sliding surface (7, 8) of said loading shoes (2, 2') with a shoe coating consisting of a metal material having a lubricating component which prevents seizing in a boundary lubrication situation.

12. The method according to claim 11, wherein the body and the shoe coating of said loading shoes (2, 2') are formed as an integral structure.

13. The method according to one of claims 8 to 12, wherein the coating method employed in said step of coating and said further step of coating, if provided, is a method using powder metallurgy.

14. The method according to claim 13, wherein the employed coating method is a hot isostatic pressing process.

15. The method according to one of claims 8 to 12, wherein the coating method employed in said step of coating and said further step of coating, if provided, is molten metal spraying.

16. The method according to one of claims 8 to 15, wherein said coating and said shoe coating, if provided, consist of bronze.

17. The method according to one of claims 8 to 15, wherein said coating and said shoe coating, if provided, consist of an alloyed steel comprising at least one alloying element selected from the following group: Sn, Pb and Mo.

## Patentansprüche

1. Walze für eine Papier- oder Kartonmaschine oder für eine Finishingmaschine, wobei die Walze eine feste Welle (3), einen Walzenmantel (4), welcher geeignet ist, um die Welle (3) zu drehen, und ein Gleitlager hat,
wobei das Gleitlager eine Anzahl von Lagerelementen hat, welche mit hydraulisch belastbaren Belastungsschuhen (2) versehen sind, welche an der festen Welle (3) zum drehbaren Abstützen und zum hydraulischen Belasten des Walzenmantels (4) montiert sind, und
wobei die Belastungsschuhe (2) einen Körper haben, welcher aus einem metallischen Material mit einem Elastizitätsmodul besteht, der höher als der von Bronze ist,
**dadurch gekennzeichnet, dass**
die Gleitfläche (10) des Walzenmantels (4) mit einer Beschichtung beschichtet ist, welche aus einem metallischen Material besteht, welches eine Schmierkomponente aufweist, wodurch ein Blockieren in einer Grenzschmiersituation verhindert ist.

2. Walze für eine Papier- oder Kartonmaschine oder für eine Finishingmaschine, wobei die Walze einen Lagerblock (6), eine drehende Welle (5) und ein Gleitlager hat,
wobei das Gleitlager eine Anzahl von Lagerelementen umfasst, welche mit hydraulisch belastbaren Belastungsschuhen (2') versehen sind, welche zur Abstützung der drehenden Welle (5) relativ zu dem Lagerblock (6) um die drehende Welle (5) an dem Lagerblock (6) montiert sind,
**dadurch gekennzeichnet, dass**
die Belastungsschuhe (2') einen Körper haben, welcher aus einem metallischen Material besteht mit einem von Elastizitätsmodul höher als der Bronze, und
dadurch, dass die Gleitfläche (9) der drehenden Welle (5) mit einer Beschichtung beschichtet ist, welche aus einem metallischen Material besteht, welches eine Schmierkomponente aufweist, wodurch ein Blockieren in einer Grenzschmiersituation verhindert ist.

3. Walze nach Anspruch 1 oder 2, wobei der Körper des Belastungsschuhs (2, 2') aus Stahl besteht.

4. Walze nach einem der Ansprüche 1 bis 3, wobei die Gleitfläche (7, 8) der Belastungsschuhe (2, 2') mit einer Schuhbeschichtung beschichtet ist, welche aus einem metallischen Material besteht, welches eine Schmierkomponente aufweist, wodurch ein Blockieren in einer Grenzschmiersituation verhindert ist.

5. Walze nach Anspruch 4, wobei der Körper und die Schuhbeschichtung der Belastungsschuhe (2, 2') ein festes Gefüge bilden.

6. Walze nach einem der Ansprüche 1 bis 5, wobei die Beschichtung und die Schuhbeschichtung, falls vorgesehen, aus Bronze bestehen.

7. Walze nach einem der Ansprüche 1 bis 5, wobei die Beschichtung und die Schuhbeschichtung, falls vorgesehen, aus einem legierten Stahl bestehen, welcher mindestens ein legierendes Element, ausgewählt aus folgender Gruppe: Sn, Pb und Mo, umfasst.

8. Verfahren zur Herstellung einer Walze für eine Papier- oder Kartonmaschine oder für eine Finishingmaschine, wobei die Walze eine feste Welle (3), einen Walzenmantel (4), welcher geeignet ist, um die Welle (3) zu drehen, und ein Gleitlager hat, wobei das Gleitlager eine Anzahl von Lagerelementen umfasst, welche mit hydraulisch belastbaren Belastungsschuhen (2) versehen sind, welche an der festen Welle (3) zum drehbaren Abstützen und zum hydraulischen Belasten des Walzenmantels (4) montiert sind,
wobei das Verfahren umfasst: einen Ablaufschritt einen Körper der Belastungsschuhe (2) aus einem metallischen Material mit einem Elastizitätsmodul, der höher als der von Bronze ist, auszubilden,
wobei das Verfahren
**gekennzeichnet ist durch**
einen Ablaufschritt die Gleitfläche (10) des Walzenmantels (4) mit einer Beschichtung zu beschichten, welche aus einem metallischen Material besteht, welches eine Schmierkomponente aufweist, wodurch ein Blockieren in einer Grenzschmiersituation verhindert ist.

9. Verfahren zur Herstellung einer Walze für eine Papier- oder Kartonmaschine oder für eine Finishingmaschine, wobei die Walze einen Lagerblock (6), eine drehende Welle (5) und ein Gleitlager hat,
wobei das Gleitlager eine Anzahl von Lagerelementen umfasst, welche mit hydraulisch belastbaren Belastungsschuhen (2') versehen sind, welche um die drehende Welle (5) zur Abstützung der drehenden Welle relativ zu dem Lagerblock (6) an dem Lagerblock (6) montiert sind,
wobei das Verfahren
**gekennzeichnet ist durch**
einen Ablaufschritt einen Körper der Belastungsschuhe (2') auszubilden, aus einem metallischen Material mit einem Elastizitätsmodul, der höher als der von Bronze ist, und
einen Ablaufschritt die Gleitfläche (9) der drehenden Welle (5) mit einer Beschichtung zu beschichten, welche aus einem metallischen Material besteht, welches eine Schmierkomponente aufweist, wodurch ein Blockieren in einer Grenzschmiersituation verhindert wird.

10. Verfahren nach Anspruch 8 oder 9, wobei der Körper der Belastungsschuhe (2, 2') aus Stahl ausgebildet wird.

11. Verfahren nach einem der Ansprüche 8 bis 10, darüber hinaus enthaltend einem Ablaufschritt die Gleitfläche (7, 8) der Belastungsschuhe (2, 2') mit einer Schuhbeschichtung zu beschichten, welche aus einem metallischen Material besteht, welches eine Schmierkomponente aufweist, wodurch ein Blockieren in einer Grenzschmiersituation verhindert wird.

12. Verfahren nach Anspruch 11, wobei der Körper und die Schuhbeschichtung der Belastungsschuhe (2, 2') ein festes Gefüge bilden.

13. Verfahren nach einem der Ansprüche 8 bis 12, wobei das eingesetzte Beschichtungsverfahren in dem Ablaufschritt der Beschichtung und dem weiterführenden Ablaufschritt der Beschichtung, falls vorgesehen, ein pulvermetallurgisches Verfahren ist.

14. Verfahren nach Anspruch 13, wobei das eingesetzte Beschichtungsverfahren ein heißisostatisches Pressen ist.

15. Verfahren nach einem der Ansprüche 8 bis 12, wobei das eingesetzte Beschichtungsverfahren in dem Ablaufschritt der Beschichtung und dem weiterführenden Ablaufschritt der Beschichtung, falls vorgesehen, Schmelzmetallspritzen ist.

16. Verfahren nach einem der Ansprüche 8 bis 15, wobei die Beschichtung und die Schuhbeschichtung, falls vorgesehen, aus Bronze besteht.

17. Verfahren nach einem der Ansprüche 8 bis 15, wobei die Beschichtung und die Schuhbeschichtung, falls vorgesehen, aus einem legierten Stahl besteht, welcher mindestens ein legierendes Element umfasst, das aus folgender Gruppe: Sn, Pb und Mo ausgewählt ist.

## Revendications

1. Rouleau pour une machine à papier ou à carton ou pour une machine de finition, le rouleau comprenant un arbre stationnaire (3), une coque de rouleau (4) adaptée pour tourner autour dudit arbre (3) et un palier de glissement,
dans lequel ledit palier de glissement comprend un nombre d'éléments de palier pourvus de sabots de chargement (2) qui peuvent être chargés hydrauliquement, qui sont montés sur ledit arbre stationnaire (3) pour supporter d'une manière rotative et charger hydrauliquement ladite coque de rouleau (4), et
dans lequel lesdits sabots de chargement (2) ont un corps consistant en un matériau métallique avec un module d'élasticité plus élevé que celui du bronze,
**caractérisé**
**en ce que** la surface de glissement (10) de ladite coque de rouleau (4) est revêtue d'un revêtement consistant en un matériau métallique ayant un composant lubrifiant qui empêche un grippage dans une situation de lubrification limite.

2. Rouleau pour une machine à papier ou à carton ou pour une machine de finition, le rouleau comprenant un bloc de palier (6), un arbre rotatif (5) et un palier de glissement,
dans lequel ledit palier de glissement comprend un nombre d'éléments de palier pourvus de sabots de chargement qui peuvent être chargés hydrauliquement (2'), qui sont montés sur ledit bloc de palier (6) autour dudit arbre rotatif (5) pour supporter ledit arbre rotatif (5) de manière rotative par rapport audit bloc de palier (6),
**caractérisé**
**en ce que** lesdits sabots de chargement (2') ont un corps consistant en un matériau métallique avec un module d'élasticité plus élevé que celui du bronze, et
**en ce que** la surface de glissement (9) dudit arbre rotatif (5) est revêtue d'un revêtement composé d'un matériau métallique ayant un composant lubrifiant qui empêche un grippage dans une situation de lubrification limite.

3. Rouleau selon la revendication 1 ou 2, dans lequel le corps desdits sabots de chargement (2, 2') consiste en de l'acier.

4. Rouleau selon l'une des revendications 1 à 3, dans lequel la surface de glissement (7, 8) desdits sabots de chargement (2, 2') est revêtue d'un revêtement de sabot consistant en un matériau métallique ayant un composant lubrifiant qui empêche un grippage dans une situation de lubrification limite.

5. Rouleau selon la revendication 4, dans lequel le corps et le revêtement de sabot desdits sabots de chargement (2, 2') constituent une structure intégrale.

6. Rouleau selon l'une des revendications 1 à 5, dans lequel ledit revêtement et ledit revêtement de sabot, s'ils sont fournis, consistent en du bronze.

7. Rouleau selon l'une des revendications 1 à 5, dans lequel ledit revêtement et ledit revêtement de sabot, s'ils sont fournis, consistent en un acier allié comprenant au moins un élément allié sélectionné à partir du groupe suivant: Sn, Pb et Mo.

8. Procédé pour fabriquer un rouleau pour une machine à papier ou à carton ou pour une machine de finition, le rouleau comprenant un arbre stationnaire (3), une coque de rouleau (4) adaptée pour tourner autour dudit arbre (3) et un palier de glissement, dans lequel ledit palier de glissement comprend un nombre d'éléments de palier pourvus de sabots de chargement qui peuvent être chargés hydrauliquement (2), qui sont montés sur ledit arbre stationnaire (3) pour supporter de manière rotative et charger hydrauliquement ladite coque de rouleau (4),
dans lequel le procédé comprend
une étape de formation d'un corps desdits sabots de chargement (2) à partir d'un matériau métallique avec un module d'élasticité plus élevé que celui du bronze,
dans lequel le procédé est **caractérisé par**
une étape de revêtement de la surface de glissement (10) de ladite coque de rouleau (4) avec un revêtement consistant en un matériau métallique ayant un composant lubrifiant qui empêche un grippage dans une situation de lubrification limite.

9. Procédé pour fabriquer un rouleau pour une machine à papier ou à carton ou pour une machine de finition, le rouleau comprenant un bloc de palier (6), un arbre rotatif (5) et un palier de glissement, dans lequel ledit palier de glissement comprend un nombre d'éléments de palier pourvus de sabots de chargement qui peuvent être chargés hydrauliquement (2'), qui sont montés sur ledit bloc de palier (6) autour dudit arbre rotatif (5) pour supporter ledit arbre rotatif (5) de manière rotative par rapport audit bloc de palier (6),
dans lequel le procédé est **caractérisé par**
une étape de formation d'un corps desdits sabots de chargement (2') à partir d'un matériau métallique avec un module d'élasticité plus élevé que celui du bronze, et
une étape de revêtement de la surface de glissement (9) dudit arbre rotatif (5) avec un revêtement consistant en un matériau métallique ayant un composant lubrifiant qui empêche un grippage dans une situation de lubrification limite.

10. Procédé selon la revendication 8 ou 9, dans lequel le corps desdits sabots de chargement (2, 2') est formé en acier.

11. Procédé selon l'une des revendications 8 à 10, comprenant de plus une étape de revêtement de la surface de glissement (7, 8) desdits sabots de chargement (2, 2') avec un revêtement de sabot consistant en un matériau métallique ayant un composant lubrifiant qui empêche un grippage dans une situation de lubrification limite.

12. Procédé selon la revendication 11, dans lequel le corps et le revêtement de sabot desdits sabots de chargement (2, 2') sont formés comme une structure intégrale.

13. Procédé selon l'une des revendications 8 à 12, dans lequel le procédé de revêtement employé dans ladite étape de revêtement et ladite étape ultérieure de revêtement, s'il est fourni, est un procédé utilisant une métallurgie des poudres.

14. Procédé selon la revendication 13, dans lequel le procédé de revêtement employé est un processus de presse isostatique à chaud.

15. Procédé selon l'une des revendications 8 à 12, dans lequel le procédé de revêtement employé dans ladite étape de revêtement et ladite étape ultérieure de revêtement, s'il est fourni, est de la pulvérisation de métal fondu.

16. Procédé selon l'une des revendications 8 à 15, dans lequel ledit revêtement et ledit revêtement de sabot, s'ils sont fournis, consistent en du bronze.

17. Procédé selon l'une des revendications 8 à 15, dans lequel ledit revêtement et ledit revêtement de sabot, s'ils sont fournis, consistent en un acier allié comprenant au moins un élément allié sélectionné à partir du groupe suivant: Sn, Pb et Mo.
